(19) Europäisches Patentamt
European Patent Office
Office européen des brevets

(11) **EP 3 497 823 B1**

(12) **EUROPEAN PATENT SPECIFICATION**

(45) Date of publication and mention
of the grant of the patent:
**08.11.2023 Bulletin 2023/45**

(21) Application number: **17748804.6**

(22) Date of filing: **10.08.2017**

(51) International Patent Classification (IPC):
**H04W 72/0453** $^{(2023.01)}$   **H04B 7/185** $^{(2006.01)}$

(52) Cooperative Patent Classification (CPC):
**H04B 7/18513;** H04W 72/0453; Y02D 30/70

(86) International application number:
**PCT/EP2017/070338**

(87) International publication number:
**WO 2018/029302 (15.02.2018 Gazette 2018/07)**

(54) **COMMUNICATION SYSTEM, TRANSMITTER AND METHOD**

KOMMUNIKATIONSSYSTEM, SENDER UND VERFAHREN

SYSTÈME DE COMMUNICATION, TRANSMETTEUR ET PROCÉDÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.08.2016 EP 16184034**

(43) Date of publication of application:
**19.06.2019 Bulletin 2019/25**

(73) Proprietor: **Fraunhofer-Gesellschaft zur
Förderung
der angewandten Forschung e.V.
80686 München (DE)**

(72) Inventors:
• **MAYER, Frank
91083 Baiersdorf (DE)**
• **WANSCH, Rainer
91083 Baiersdorf (DE)**

(74) Representative: **Pfitzner, Hannes
Schoppe, Zimmermann, Stöckeler
Zinkler, Schenk & Partner mbB
Patentanwälte
Radlkoferstraße 2
81373 München (DE)**

(56) References cited:
**US-A1- 2007 248 173    US-A1- 2015 249 462
US-B1- 9 209 891**

• **IAN F. AKYILDIZ ET AL: "LTE-Advanced and the
evolution to Beyond 4G (B4G) systems",
PHYSICAL COMMUNICATION, vol. 10, 1 March
2014 (2014-03-01), pages 31-60, XP055341250,
AMSTERDAM, NL ISSN: 1874-4907, DOI:
10.1016/j.phycom.2013.11.009**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Embodiments of the present invention refer to a satellite communication system for performing communication within a designated system bandwidth and to a method for performing the communication. An additional embodiment refers to a satellite transmitter of the communication system.

Within the prior art some communication systems are known. For example, the US 2007/248173 shows an OFDMA based on cognitive radio. Here, a multi-user scheme allows for a number of users. Satellite Communication may be used, among other applications, in Machine to Machine (M2M) or "Internet of Things" (IoT) type applications, connecting fixed or mobile "terminals" via a satellite communication link to the internet or other infrastructure (e.g. servers, databases, "the cloud"). Communication may be uni-directional - typically from the terminals to the satellite, e.g. for reporting location or state information or sensor readings - or bi-directional, transmitting messages or data from and to the terminals.

M2M or "IoT" type terminals may be deployed in larger quantities and thus are cost and resource constraint. Resource constraints include total energy budget (e.g. for battery powered devices), available or permitted peak transmit power, antenna gain and pointing performance and overall size of the terminal and antenna. The amount of data transmitted by a single terminal may be very small and transmissions may occur infrequently while the amount of spectrum designated to the system may be comparable large (few to several MHz of bandwidth). This allows operating the communication link at low spectral efficiency and/or assigning only a small fraction of the designated satellite link bandwidth and capacity to an individual terminal.

In many cases, transmissions from the terminals need to comply with a spectral power density (PSD) mask, limiting the amount of power transmitted into the direction of other satellites or other systems. Depending on region, only a narrow angular range of $\pm 1.5°$ or $\pm 2.0°$ along the geostationary arc ("in-plane" direction) remains unconstraint, while emissions into all other directions are more or less constraint in power (density) over any $BW_{ref}$ = 4kHz (FCC 25.218, 25.222, 25.227) or $BW_{ref}$ = 40kHz (ITU-R S.728-1) frequency slot.

For a typical antenna, the beam width is indirectly proportional to the antenna size. E.g. the beam width of a

$$bdia \approx \frac{70\lambda}{d_{refl}}$$

parabolic dish reflector type antenna may be approximated by , where $d_{refl}$ is the reflector size (in meter) and $\lambda$ the wavelength of the signal (in meter). $bdia$ is the resulting beam width (diameter measured with respect to the -3dB contour) in degree, and e.g. calculates as $bdia$ = 7.5° for a 20 cm antenna ($d_{refl}$ = 0.2 m) used for transmission in Ku-Band at 14 GHz ($\lambda$ = 0.0214m). From this value it becomes apparent that energy emitted by such a small antenna is not only transmitted towards the wanted satellite; a significant fraction of the energy is transmitted towards other satellites and thus subject to limiting by the mask.

Moreover, installation of a fixed terminal antenna may result in a systematic offset, biasing the beam to the "left" or "right", and potentially transmitting even more energy towards other satellites. Similar for mobile terminals, errors inherent in the antenna tracking and pointing means may result in potential emissions towards other satellites. Therefore, when determining mask compliance, systematic and random pointing errors need to be taken into account, widening the nominal beam width and typically further constraining the transmitted power.

A straight forward approach for determining spectral mask compliance and sizing the terminal power accordingly uses the antenna beam shape as function of pointing angle, normalized to 0 dB maximum gain, then applies a worst case "max-hold" de-pointing of this shape and finally compares the result to the spectral mask, looking for the minimum margin between de-pointed shape and the mask. This minimum margin - which might be negative - will define the maximum allowable power of the terminal within any $BW_{ref}$ frequency slot. Assuming equal power distribution for the carrier signal transmitted by the terminal, multiplication by the number of $BW_{ref}$ frequency slots occupied by the carrier signal yields the maximum allowable power for such a carrier.

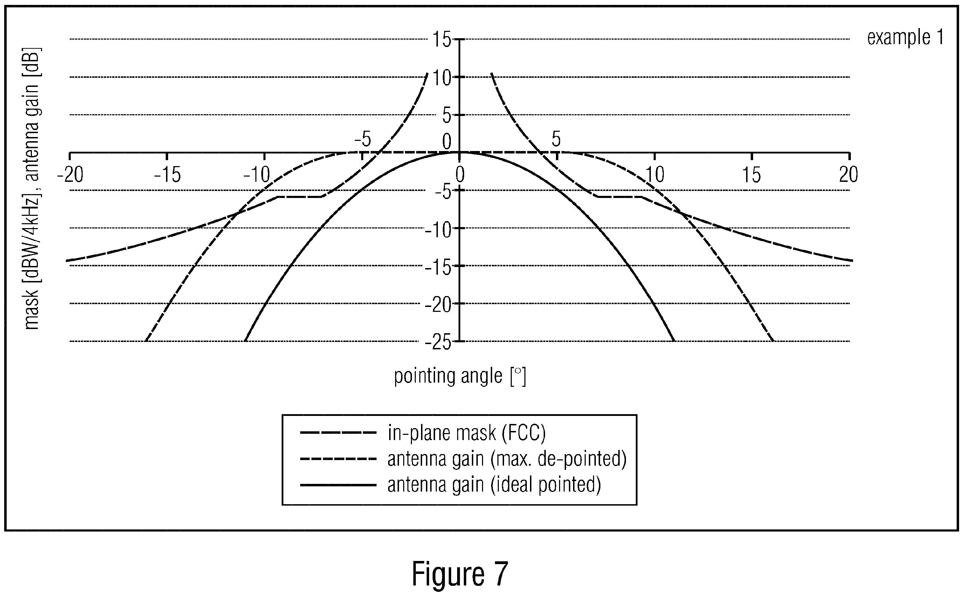

As Example 1, this approach is illustrated in Figure 7, using the in-plane mask as defined by FCC 25.218 for a "conventional Ku-band digital earth station (N=1)". The ideal (zero de-pointing) antenna gain is approximated by $G_0(d)$ = -12 · ($d$/$bdia$)$^2$ with $bdia$ = 7.5°. A maximum de-pointing of $pe$ = 5.0° is assumed, resulting in an antenna gain envelope approximated by

$$G_{pe}(d) = \begin{cases} G_0(d + pe) & d < -pe \\ 0 & -pe \leq d \leq +pe. \\ G_0(d - pe) & d > +pe \end{cases}$$

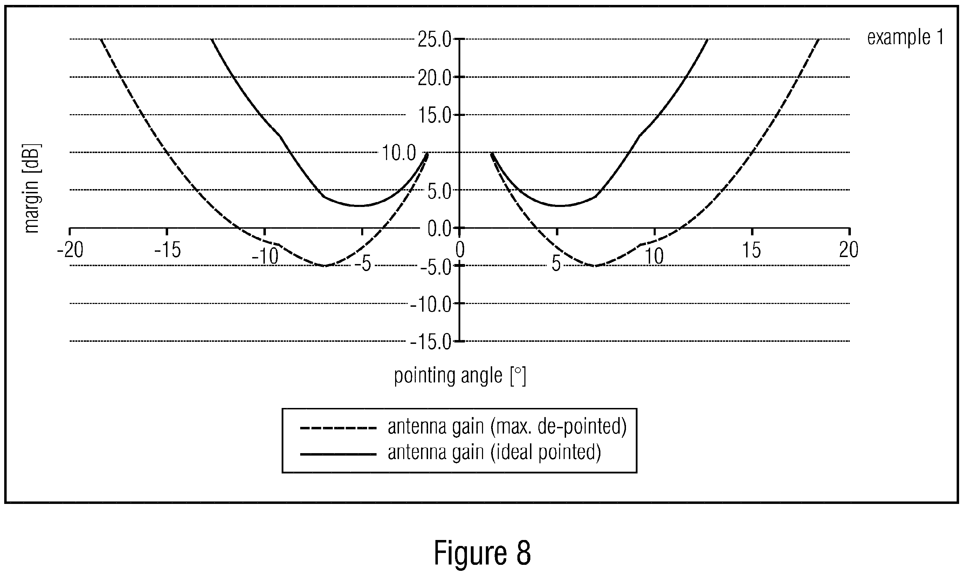

The resulting margin is illustrated in Figure 8, with a minimum of 2.9 dB at $\pm 5°$ for the ideal (zero de-pointing) antenna gain and -5.3 dB at $\pm 7°$ for the antenna gain envelope over maximum de-pointing range. Assuming worst case de-pointing, maximum permitted power in this example is therefore -5.3 dBW/4kHz or 0.7 dBW for a 16 kHz signal carrier and $BW_{ref}$ = 4kHz.

Within the prior art, there are some approaches aiming with regard to the above discussed problem. Exemplarily, methods for managing PSD mask compliance and/or for maximizing mask-compliant PSD usages are known from prior art:

The US 2002058477A discloses a system that "employs a ground-based network operations center ("NOC") having a central control system for managing access to the satellite-based transponder so that the aggregate power spectral density (PSD) of the RF signals of all the mobile systems does not exceed, at any time, limits established by regulatory agencies to prevent interference between satellite systems." This method uses "a reverse calculation method to determine mobile terminal EIRP and then using antenna models to project the EIRP on to the GEO arc. Accurate knowledge of the mobile terminal location and attitude is acquired through periodic reports sent from the mobile terminal to the NOC".

The US 8885693B discloses a system using "An automated process to periodically check and ensure that earth terminal settings provide compliant EIRPSD" and where the "current input power spectral density being transferred to the antenna is computed by the apparatus and compared to the preprogrammed regulatory limit for the specific antenna".

The US 2010124922A discloses "A network for obfuscating satellite terminal transmission activity", and "calculate(s) how much unused transmission power spectral density is available to the network for obfuscation by subtracting from a total network regulatory transmission power spectral density limit the aggregate transmission power spectral density."

Moreover, some known methods intended for managing adjacent satellite interference (ASI) are also beneficial for solving the problem of PSD mask compliance, e.g. by commanding the interfering terminal to reduce the transmit power or by readjusting the antenna pointing.

The US 2002146982A discloses "A method for rapidly monitoring and detecting a mobile terminal causing RF interference with one or more satellites orbiting in the vicinity of a target satellite, from a plurality of mobile terminals accessing the target satellite." This includes a method for identification of a "mobile platform as causing the unintended RF interference with the adjacent satellite(s)."

The US 2002146995A discloses "A system and method for quickly detecting and remedying an interference incident caused by one of a plurality of mobile terminals in communication with a transponded satellite." This includes a method for identification which of the "mobile terminals has caused an interfering event by determining which mobile terminal accessed the communication system just prior to the interference event arising."

The US 2002151278A discloses "A method and apparatus for identifying which one of a plurality of mobile terminals in communication with a ground-based base station, via a transponded satellite, is causing interference with a non-target satellite orbiting in a vicinity of the transponded satellite." This includes a method to identify the mobile terminal causing the interference condition and to "command the mobile terminal to reduce it transmit power accordingly".

The US 2011269396A discloses "A method for remotely and dynamically controlling adjacent satellite interference comprising monitoring one or more off-axis signals emitted by one or more remote transmitters; determining whether one or more of the off-axis signals is creating adjacent satellite interference (ASI), off axis emissions and inband interference that is higher than a predetermined level of acceptable interference, and transmitting a control signal to at least one of the one or more remote transmitters in response to the determination".

Methods to allow operation of non-compliant antenna are known from prior art. Such methods may also be applied to managing PSD mask non-compliance.

The US 7962134B discloses "A system and method allow end users the ability to operate using non-compliant antennas. A coordination database may be continually updated with respect to geographic coordinates, time planning, frequency and orbital positions."

The US 2009052373A discloses "Methods to improve the efficiency of satellite transmission by coordinating the use of corresponding channels on adjacent satellites."

For a given antenna, PSD mask compliance limits the maximum transmitted power of the terminal. Thus system efficiency may be improved by employing methods that result in less aggregate power required for transmitting the same amount of data:

Using a specific spreading technique, US 2004037238A discloses that "Orthogonal CDMA (OCDMA) in the return link of a satellite based communications system provides improved bandwidth efficiencies; increased ability to overcome channel degrading phenomenon; reduced transmission power; or various combinations thereof" and that this results in the "same, or lower, aggregate power as would be used by a single terminal using TDMA."

The US 6052364A states "A satellite communication system including a portable satellite terminal is provided which utilizes C/Ku-band and spread spectrum technology to drastically reduce the antenna and terminal sizes."

The US 2012156986A discloses "A method of reducing adjacent satellite interference, the method comprising monitoring, by a processor, a power spectral density (PSD) of a signal transmitted by a remote transmitter". Among other alternatives, this includes adjusting the "spread spectrum spreading factor" for "reducing the PSD of the signal transmitted".

Detection of de-pointed stationary antennas or improvements in the pointing accuracy of a mobile antenna yield less individual and/or average pointing error; this may result in increased minimum margin between de-pointed shape and mask.

The US 2002050953A discloses "a system and method for monitoring a non-tracking satellite antenna terminal's pointing accuracy in three situations."

The US 5398035A discloses an example for tracking a satellite and steering the antenna pointing angle, where "An antenna attitude controller maintains an antenna azimuth direction relative to the satellite by rotating it in azimuth in response to sensed yaw motions of the movable ground vehicle so as to compensate for the yaw motions to within a pointing error angle. The controller sinusoidally dithers the antenna through a small azimuth dither angle greater than the pointing error angle while sensing a signal from the satellite received at the reflector dish, and deduces the pointing angle error from dither-induced fluctuations in the received signal."

The US 2011304496A discloses "The combination of a dual offset Gregorian antenna (DOGA) with a stabilized polarization over elevation over tilt over azimuth pedestal, and a control/stabilization algorithm, ensures antenna orientation restrictions guarantee compliance with side-lobe intensity regulations".

Since all of the above discussed state of art approaches suffer under some drawbacks, there is the need for an improved approach.

Objective of the present invention is to provide a concept enabling for at least one, preferably for multiple transmitters a stable communication having an increased signal to noise ratio and interference ratio and an increased spectral efficiency and data throughput.

This objective is solved by the subject matter of the independent claims.

Embodiments of the present invention provide a satellite communication system for performing a communication within a designated system bandwidth according to claim 1.

Teachings disclosed herein are based on the findings that it is more beneficial for a communication system (having a designated system bandwidth) to allow multiple transmitters (like terminals) to use the same frequency slot (portion of the designated system bandwidth) in a special manner instead of assigning the multiple frequency slots to the multiple transmitters. Here, special manner means that each frequency slot is sub-divided into sub-slots, wherein the respective first sub-slot within all frequency slots of the system bandwidth is typically assigned to a first transmitter. Analogously for the case multiple transmitters use the system a respective second sub-slot within each frequency slot is assigned to a second transmitter, etc. Thus, this approach partitions the designated bandwidth and each terminals carrier signal in a way that allows multiple terminals to transmit concurrently and independently within the frequency slots. The reason for this is that the known statistical properties ("law of large numbers") lead to a reduced (average) pointing error.

Assuming multiple terminals concurrently transmitting, known statistical properties ("law of large numbers") lead to a reduced variance (standard deviation) of the pointing error, improving the power margin to the PSD mask (regulatory constraint). This in turn allows increasing the individual and aggregate terminal signal power within each $BW_{ref}$ frequency slot, resulting in a proportionally increased signal to noise and interference ratio and thus increased spectral efficiency and throughput. Assuming multiple terminals concurrently transmitting, known statistical properties also make it unlikely that $N$ concurrent transmissions are affected the same or similar instantaneous pointing error. This allows introducing an additional correction factor $c(N,p)$, allowing a further increase in the individual and aggregate terminal signal power within each $BW_{ref}$ frequency slot, resulting in further increased signal to noise and interference ratio and thus in further increased spectral efficiency and throughput.

According to another embodiment, the sub-carriers within a frequency slot and/or within the system bandwidth are arranged equidistant (equidistantly spaced in frequency). Here, each slot bandwidth within the frequency slots or within the system bandwidth may have the same size. Thus, the distance between the sub-carriers transmitted by the same terminal may be fixed and known, and can be beneficially used when "collecting" the sub-carrier belonging to the same transmission in a receiver, e.g. using poly-phase filter or FFT-based algorithms. The known repetition of the sub-carriers transmitted by the same terminal in subsequent slots can be beneficially used in the receiver, when identifying the sub-carrier frequency offset or to determine, which sub-carriers are actually in use. The search may be limited to the sub-slots of a single frequency slot as the sub-carrier frequency offset is identical in all used slots. According to further embodiments, the number of slots and/or the bandwidth of each frequency slot is adapted dynamically, e.g. based on the number of transmitters or based on the designated system bandwidth, or based on the required bandwidth for each terminal.

According to the present invention, the emitting behavior for each transmitter is limited with regard to the peak transmit power, the antenna gain and with regard to the pointing performance. The transmitter is configured to bias an antenna gain envelope and/or a transmit power in accordance with the limitations.

According to further embodiments, the communication system comprises a determiner configured to determine a correction factor for adapting a biasing of the antenna gain envelope of the respective transmitter. The correction factor may be a function of the number of transmitters within the system, or a function of the number of selective frequency slots. Additionally, the determiner may be configured to analyze the current transmitting requirements, e.g. the required bandwidth of all transmitters and to adapt the correction factor in accordance with the analysis result.

Another embodiment provides a satellite transmitter of the system according to claim 15, which uses a plurality of sub-slots, each arranged with its own frequency slot for transmitting a signal to a receiver.

Another embodiment provides a method for performing communication within a designated system bandwidth according to claim 16.

Embodiments of the present invention will subsequently be discussed referring to the enclosed Figures, wherein

Figure 1    shows an exemplary block diagram of a system for performing a communication according to an embodiment;

Figure 2    shows a schematic diagram illustrating the principle of dividing a designated bandwidth into frequency slots and sub-slots in accordance to an embodiment;

Figure 3    shows a schematic diagram of a bandwidth $BW_s$ and carrier signal partitioning;

Figure 4    shows a schematic diagram illustrating FCC mask and antenna gain examples;

Figure 5    shows a schematic diagram illustrating a margin for the embodiment of Figure 4;

Figure 6    shows a schematic diagram for a pointing error simulation;

Figure 7    shows a schematic diagram illustrating FCC mask and antenna gain according to a conventional approach; and

Figure 8    shows a schematic diagram illustrating a margin resulting from the example of Figure 7 according to a conventional approach.

Before discussing embodiments of the present invention in detail, it should be noted that identical reference numerals are provided to objects having identical or similar function, so the description thereof is interchangeable or mutually applicable.

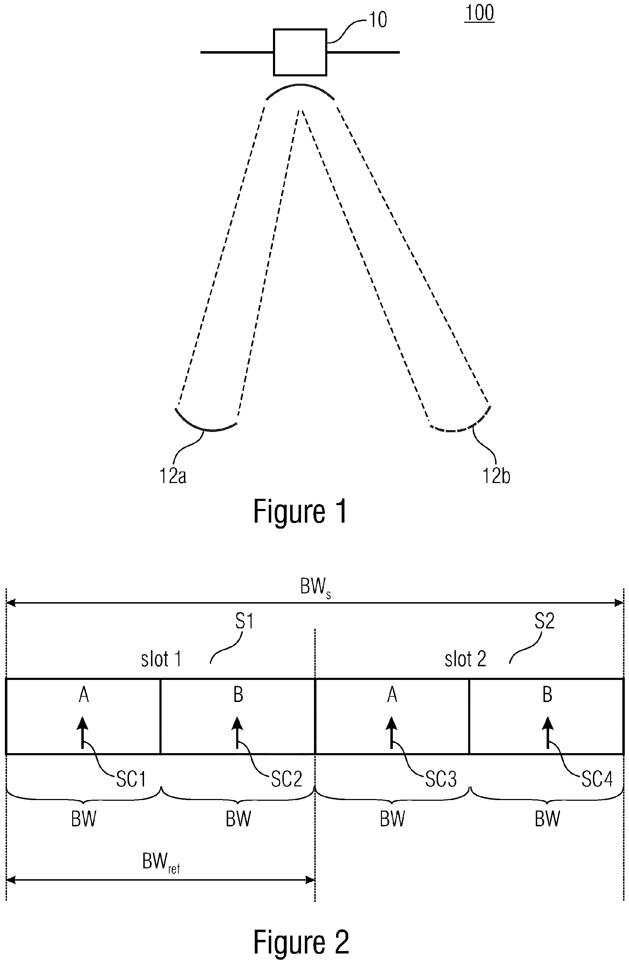

Figure 1 shows a system 100 for performing a communication. Here, the system 100 comprises one satellite 10 as receiver and a first terminal 12a as transmitter. Additionally, the system 100 comprises the optional second transmitter 12b. Both transmitters 12a and 12b transmit a respective signal to the receiver 10 using frequencies within the system bandwidth.

This system bandwidth $BW_s$ is illustrated by Figure 2. As can be seen, the entire designated system bandwidth $BW_s$ is divided into frequency slots, here two frequency slots S1 and S2. As discussed above, the typical approach is that the first transmitter 12a uses the slot 1 (reference number S1) and the second transmitter 12b uses the slot 2 (reference number S2). However, in this case, each slot is subdivided into sub-slots A and B such that multiple concurrent transmissions within the same slot are enabled. In detail, each sub-slot A and B of the first and second slot has an own sub-carrier as illustrated by the respective arrow marked with the reference numeral SC1 to SC4. Preferably, but not necessarily, the bandwidth BW of the sub-slots A and B within the two slots S1 and S2 have equal size. Consequently, the sub-carriers SC1 to SC4 are equidistantly spaced apart from each other.

In the embodiment of Figure 1, the transmitter 12a, e.g. an unidirectional transmitter, transmits its (first) signal to the receiver 10, e.g. a data signal to the satellite 10. Here, the transmitter 12a uses the sub-slots A, i.e. the sub-slot A of the slot S1 and the sub-slot A of the slot S2. For doing this, the transmitter 12a splits the (first) signal to be transmitted in a first and second signal portion, wherein the first signal portion is transmitted by modulating the portion to the carrier SC1 of the sub-slot A of slot S1 and by modulating the second signal portion to the carrier SC3 of the sub-slot A of slot S2.

In the same manner, the optional transmitter 12b splits its signal into signal portions, which are transmitted via the sub-slots B (using the carrier SC2 and SC4).

As a result the signals carrying the payload of the transmitters 12a, 12b are spread over a large, here the entire bandwidth $BW_s$, using equally spaced sub-carriers; consequently, the used carriers SC1 to SC4 are spaced apart from each other by the reference bandwidth $BW_{ref}/2$. Due to the spreading, the concept allows multiple terminals and to concurrently transmit within at least one $BW_{ref}$ frequency slot.

The usage of different portions within the system bandwidth $BW_s$, each portion belonging to a certain group (cf. group A for the transmitter 12a or group B for the transmitter 12b) has the advantage that statistically, the pointing error does not fully constructively aggregate, since it is unlikely that two different terminals 12a and 12b have the same instantaneous pointing error. This leads to a lower aggregated pointing error and, thus, to an improvement of the power margin to the PSD mask. By reducing the value of the maximum de-pointing pe used in calculating the gain envelope $G_{pe}(d)$, the minimum margin between the de-pointing antenna gain envelope $G_{pe}(d)$ and the PSD mask may be improved. According to embodiments, this allows to increase the individual and aggregated terminal signal power within each bandwidth $BW_{ref}$.

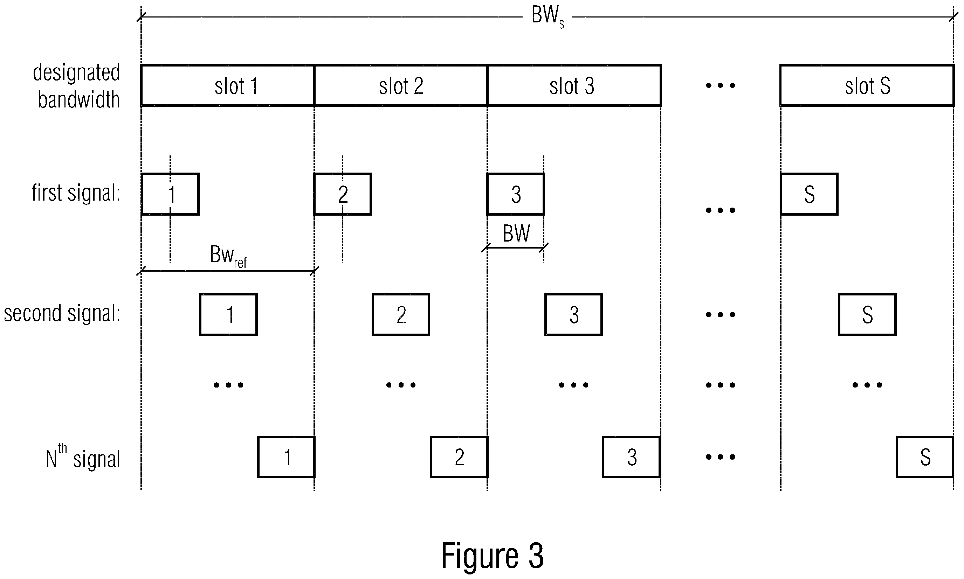

Although in above embodiment the positioning of the respective sub-slots of a group A or B and, thus, the respective subcarriers SC1, SC2, SC3, SC4 has been illustrated in a way that same are arranged within the different frequency slots 1 and 2 always at the same position, it should be noted that according to further embodiment the position within the respective slot may vary. With respect to Figure 3, an enhanced embodiment will be discussed.

As illustrated in Figure 3 the total bandwidth $BW_S$ designated to the system is sub-divided into $S$ slots, each having bandwidth $BW_{ref}$. Each slot is further sub-divided into $N$ sub-slots, each having bandwidth $BW$. Each carrier signal is also sub-divided into $N$ sub-carrier; these sub-carriers are equidistantly spaced in frequency with distance $BW_{ref}$, and with each sub-carrier having the sub-slot bandwidth $BW$. This results in bandwidth $BW_i = S \cdot BW$ available to each carrier signal.

Assuming $N$ sufficiently large and the actual instantaneous pointing error $pe_i$ of each terminal i being independently and randomly distributed, it is highly unlikely that all $pe_i$ aggregate fully constructively. The resulting variance of the aggregated pointing error $pe_s$ is therefore much lower than the variance of each individual pointing error $pe_i$; the maximum pointing error used for calculating the (aggregated) antenna gain envelope therefore is smaller than the maximum pointing error used for calculating the (individual) antenna gain envelope.

Worst case, all $N$ terminals are concurrently transmitting in each $BW_{ref}$ frequency slots. As the aggregated power within each such $BW_{ref}$ frequency slots is limited by the PSD mask, the transmit power of each terminal needs to be reduced to $1/N$ of the calculated value.

As Example 2, assume $BW_S$ = 800 kHz and $BW_{ref}$ = 4 kHz, thus $S$ = 200. Assume the pointing error for each terminal follows a Normal Distribution, $\mathcal{N}(\mu, \sigma^2)$, with $\mu$ = 0 and $3\sigma$ = 5°. Using known properties of the Normal Distribution, the vast majority of the values (99.7%) will be within the interval $\mu - 3\sigma$ to $\mu + 3\sigma$. This is assumed being a reasonable upper bound for the maximum pointing error in this example, thus $pe = 3\sigma$ = 5°.

Again using known properties of the Normal Distribution, the sum of $N$ normally distributed variables is also normally distributed, with $\mu' = N \cdot \mu = 0$ and $\sigma'^2 = N \cdot \sigma^2$ or $\sigma' = \sqrt{N} \cdot \sigma$. The variance of the mean of $N$ normally distributed variables scales by 1/N, thus $\sigma_S = 1/N \cdot \sigma' = 1/\sqrt{N} \cdot \sigma$. Assuming $N$ = 50 sub-slots for up to $N$ terminals concurrently transmitting, $pe_S$ is reduced by $1/\sqrt{50}$ from $pe$ = 5° to $pe_S$ = 0.71°.

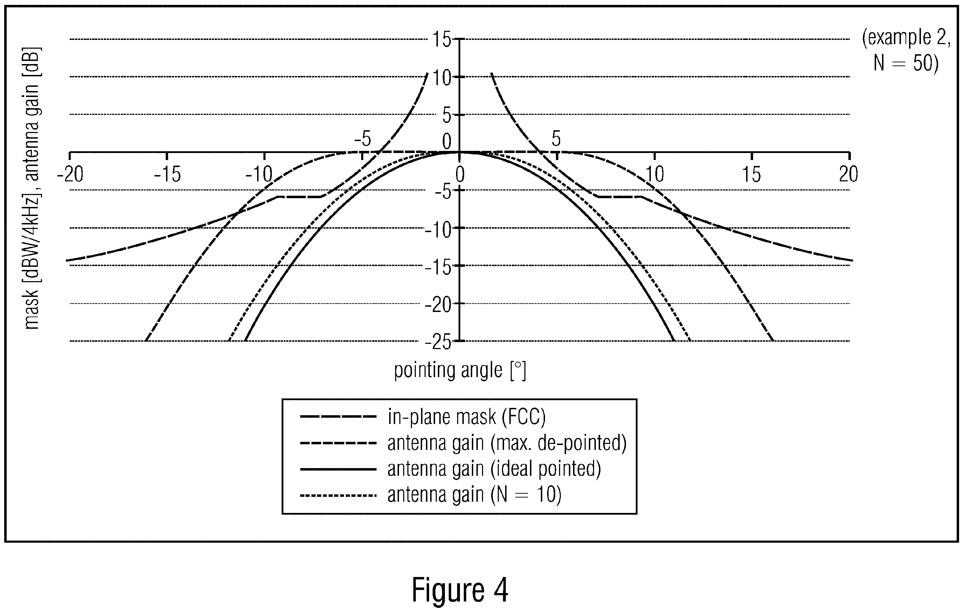

The resulting aggregated antenna gain envelope for $N$ = 50 is illustrated in Figure 4, together with the original antenna gain envelope for a single terminal ($N$ = 1) and the ideal (zero de-pointing) antenna gain.

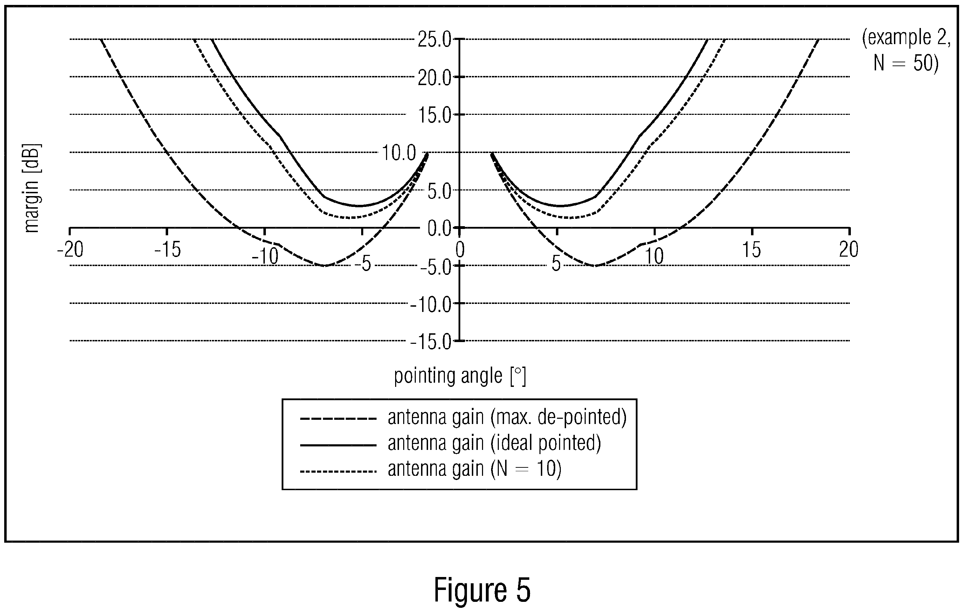

The resulting margin is illustrated in Figure 5, with a minimum of 1.4 dB at $\pm 5.4°$ for $N$ = 50. This yields an improvement of 6.7 dB compared to the minimum of -5.3 dB at $\pm 7°$ for the aggregated antenna gain envelope for a single terminal (N = 1).

As $N$ = 50 terminals are assumed to be concurrently transmitting, the maximum power per terminal and $BW_{ref}$ = 4kHz slot needs to be scaled down by 1/N. In the example, each terminal's transmit power per $BW_{ref}$ is set to 1.4 dBW/4kHz - 10 · $\log_{10}$ 50 = - 15.6 dBW/4kHz. As each carrier is divided into $S$ sub-carriers, with each sub-carrier in a different $BW_{ref}$ sized slot, total transmit power per terminal may be scaled up by $S$. Using all $S$ = 200 slots, each terminal transmits at -15.6 dBW + 10 · $\log_{10}$ 200 = 7.4 dBW. Compared to Example 1, this results in a more than 4 times (6.7 dB) higher power allowance for each terminal transmitting sub-carriers with the same aggregated bandwidth of 16 kHz.

The above assumes a worst case aggregation of the $N$ concurrent transmissions, resulting in a scaling by 1/N. This worst case aggregation requires all $N$ concurrent transmissions having the same instantaneous pointing error, which is increasingly unlikely and pessimistic for larger numbers of $N$.

According to further embodiments, the system may be configured to determine a correction factor. The determiner performs the optional step of determining a correction factor $c(N,p)$ (in dB) as a function of the number $N$ of sub-slots and/or of terminals concurrently transmitting and a target probability $p$ (e.g. $p$ = 99.9%) for the aggregated antenna gain not exceeding 10 · $\log_{10} N - c(N, p)$. This correction factor is then used for calculating a biased antenna gain envelope given by $G'_{pe}(d) = G_{pe}(d) - c(N, p)$ and/or for calculating the transmit power. Consequently the biasing is dependent on the number of transmitters and/or subslots.

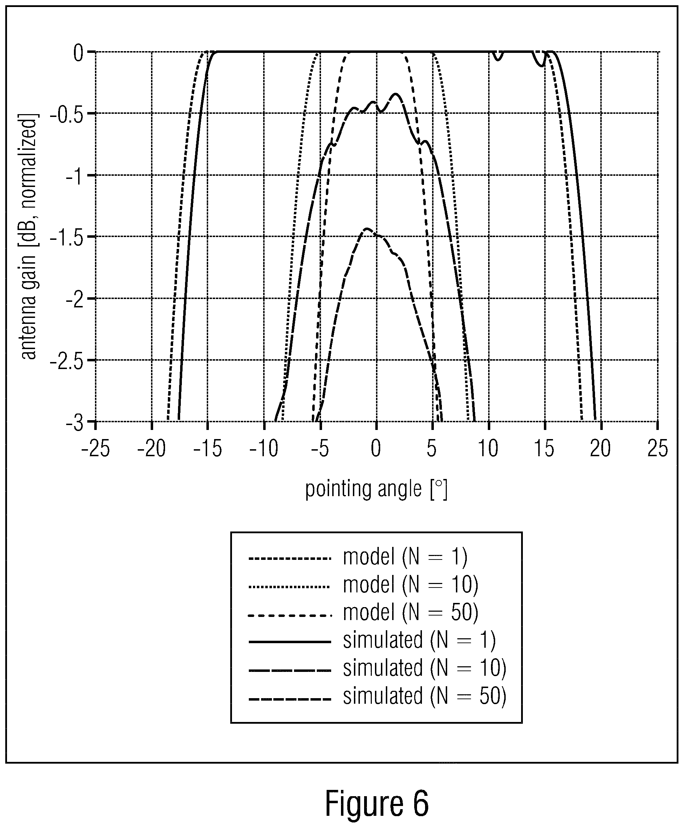

This additional step is illustrated as Example 3, using a Monte-Carlo type simulation to determine the correction factor $c(N,p)$. Figure 6 shows the aggregated antenna gain for different values of $N$ = 1,10,50, resulting from an experiment with 500 random trials. The aggregated gain is normalized to 0 dB, by shifting the result by 10 · $\log_{10} N$ prior to plotting. For all $N$ the simulation result aligns reasonably well with the shape of the $G_{pe}(d)$ model. However, the maximum gain observed in the experiment is -0.4 dB for N = 10 and -1.5 dB for N = 50. Therefore for N = 50 a correction factor $c$ = 1.5 dB is assumed, increasing the margin (illustrated in Figure 5, minimum of 1.4 dB at $\pm 5.4°$ for $N$ = 50) to 2.9 dB and thus the allowable power density per terminal to -14.1 dBW/4kHz.

According to further embodiments, an improvement considers the probability of only $N_i$ of the maximum $N$ terminals actually transmitting as a function of network utilization and determines correction factors $c(N_i,p)$ for each $N_i$.

Assuming the system uses a "scheduler" that coordinates the medium access by granting transmit permissions to a maximum of $N$ terminals and assigning the slot frequency offsets, such a scheduler additionally calculates the applicable correction factor $c(N_i,p)$ for the current $N_i$ and communicates this additional power increase allowance to the

$N_i$ active terminals.

As Example 4, assume $N$ = 50 and $N_i$ = 25. As only 50% of the terminals actually transmit, each of the transmitting terminals may use 3 dB more power. The correction factor $c$ = 1.5 *dB* from Example 3 improves to c = 4.5 *dB* and thus the allowable power density per terminal improves to -11.1 *dBW/4kHz*.

Assuming the system uses no such "scheduler" coordinating the medium access, the correction factor $c$ (calculated for $N$) still can be improved by excluding all $N_i$ and corresponding $c(N_i,p)$ having zero or negligible (i.e. below a predefined threshold) probability and setting c to the worst case value of the remaining $c(N_i,p)$. Such an adjustment is especially beneficial for systems using distributed randomized (e.g. ALOHA-type) medium access control, where the system loading is limited by design to a small fraction of the total system capacity, with large $N_i$ thus being unlikely by design.

According to further embodiments, the above described concept can be beneficially used in systems employing a "scheduler" that coordinates the medium access: If only $N_i$ of the $N$ terminals are actually transmitting ($N_i$ < $N$) the additional possible power increase is communicated to the terminals (as part of scheduling the transmissions by an e.g. central scheduler). Again this further increases the terminal signal power within each $BW_{ref}$ frequency slot, resulting in further increased signal to noise and interference ratio and thus in further increased spectral efficiency and throughput.

According to further embodiments, each of the transmitters may be configured to adapt the per-terminal power based on the loading of the $BW_{ref}$ sub-slots (for system using a scheduler) or may be statically biased (for systems using distributed randomized medium access control). Additionally, it should be noted that the concept can be beneficially be used in systems using distributed randomized (e.g. ALOHA-type) medium access control, excluding large $N_i$ as being unlikely by design of the medium access control scheme and setting c to the worst case value of the remaining $c(N_i,p)$. As $c(N_i,p)$ increases with $N_i$ decreasing, the resulting $c$ allows for an additional power increase in (by design) lightly or moderately loaded systems, resulting in further increased signal to noise and interference ratio and thus in further increased spectral efficiency and throughput.

Although, the embodiments have been discussed with respect to the system 100, it should be noted that further embodiment refers to the transmitter itself. The transmitter may be a uni-directional transmitter, e.g. a transmitter of a machine-to-machine, or internet of things type application, in which typically many terminals are transmitting data towards a receiver like a satellite or to a terrestrial receiver. According to further embodiments, the transmitter may be a bi-directional unit, wherein it should be noted that with respect to the prior art, the above discussed concept is beneficial, since this concept does not require a communication channel towards the terminals, e.g. for communicating the power allowance to the terminal or commanding the interfering terminals to reduce transmit power in order to manage the PSD mask compliance, or adjacent satellite interferences.

A further embodiment which is not part of the invention refers to a receiver configured to receive a signal from a transmitter, wherein the signal is delivered within at least two signal portions transmitted using two carriers belonging to two different slots (but to the same group of sub-slots).

Although within the above implementations, it has been stated that the sub-carriers are preferably equidistantly spaced from each other, it should be noted that according to further embodiments, the system may be configured to perform the spacing of the sub-carriers dynamically. According to further embodiments, the usage of different sub-carrier bandwidths (dynamically assigned or from a set of predefined widths) are also possible. Alternatively, the use of $BW_{ref}$ that is a (integer) fraction of the reference bandwidth in the applicable PSD mask, e.g. $BW_{ref}$ = 2kHz or $BW_{ref}$ = 1kHz is possible. Instead of equidistantly dividing of the designated bandwidth, a hierarchical frequency partitioning may be used. Here, groups of slots, each group spanning a dedicated fraction of the designated bandwidth BWs and limiting the sub-carrier sequence to the slots belonging to one group may be used.

As illustrated with respect to Figure 3, the number of sub-sots may be larger than two, i.e. three or more. In this context it should be noted that the number of sub-slots typically limits the number of transmitters of the system.

Above embodiments are based on the assumption that the number of subslots (N) are equal to the number of terminals (N). This is the preferred variant, however it should be noted that the number of subslots (N) could also be smaller or larger when compared to the to the number of terminals (N), e.g. if some subslots are recently not used or reserved for inactive terminals.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention are implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitionary.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

## Claims

1. Satellite communication system (100) for performing a communication within a designated system bandwidth (BWs), the system comprising:

    a plurality of N satellite transmitters (12a), wherein the plurality of N satellite transmitters (12a) comprises a first satellite transmitter (12a) being configured to transmit a first signal using frequencies within the system bandwidth (BWs);
    a satellite receiver (10) for receiving at least the first signal,
    wherein the system bandwidth (BWs) is divided into a plurality of frequency slots (S1, S2), each of the plurality of frequency slots having a slot bandwidth ($BW_{ref}$), and wherein each of the plurality of frequency slots (S1, S2) is divided into a plurality of N sub-slots (A, B), each sub-slot having a sub-slot bandwidth (BW) and a subcarrier (SC1, SC2, SC3, SC4),
    wherein the respective first sub-slot (A, B) of the plurality of N sub-slots (A, B) within all frequency slots is assigned to the first satellite transmitter (12a) and
    wherein the respective $N^{th}$ sub-slot (A, B) of the plurality of N sub-slots (A, B) within all frequency slots is assigned to the $N^{th}$ satellite transmitter (12a),
    wherein the first satellite transmitter (12a) is configured to split the first signal into a plurality of signal portions and to select for transmitting a first of the plurality of signal portions the first sub-slot of a first of the plurality of frequency slots (S1, S2) and to select for transmitting a second of the plurality of signal portions the first sub-slot of a second of the plurality of frequency slots (S1, S2), the second of the plurality of frequency slots (S1, S2) being different from the first of the plurality of frequency slots (S1, S2);
wherein emitting behavior of each of the plurality of N satellite transmitters is limited with regard to a peak transmit power, an antenna gain and with regard to a pointing performance, wherein the limitations are dependent on N and wherein the first satellite transmitter (12a) is configured to bias an antenna gain envelope and/or a transmit power in accordance with the limitations.

2. Communication system (100) according to claim 1, wherein the communication system comprises a second transmitter (12b) for transmitting a second signal using frequencies within the system bandwidth (BWs); wherein the second transmitter (12b) is configured to split the second signal into a second plurality of signal portions, and to select for transmitting a first of the second plurality of signal portions a second sub-slot of the first of the plurality of frequency slots (S1, S2) and to select for transmitting a second of the second plurality of signal portions a second sub-slot of the second of the plurality of frequency slots (S1, S2).

3. Communication system (100) according to claim 2, wherein the first and the second transmitter (12a, 12b) are configured to use for transmitting the plurality of signal portions different subcarriers (SC1, SC2, SC3, SC4) and/or the the first and second transmitter (12a, 12b) are configured to use for transmitting the plurality of signal portions subcarriers (SC1, SC2, SC3, SC4) of different frequency slots (S1, S2).

4. Communication system (100) according to one of the previous claims, wherein the first transmitter (12a) is configured to select for transmitting a third of the plurality of signal portions the first sub-slot of a third of the plurality of frequency slots, the third of the plurality of frequency slots being different from the first and the second of the plurality of frequency slots,

5. Communication system (100) according to one of the previous claims, wherein all sub-slot bandwidths (BW) of the plurality of sub-slots (A, B) of at least one of the frequency slots (S1, S2) have equal lengths.

6. Communication system (100) according to one of the previous claims, wherein subcarriers (SC1, SC2, SC3, SC4) within at least one of the plurality of frequency slots (S1, S2) or within all of the plurality of frequency slots (S1, S2) are arranged equidistant.

7. Communication system (100) according to one of the previous claims, wherein the first satellite transmitter (12a) is configured to dynamically select a number of frequency slots (S1, S2) or a number of sub-slots (A, B) or the sub-slot bandwidth (BW) in accordance with a number of transmitters (12a, 12b) or in accordance with a required bandwidth for each transmitter.

8. Communication system (100) according to one of the previous claims, wherein the first satellite transmitter (12a) is configured to dynamically select a number of frequency slots (S1, S2) or a number of sub-slots (A, B) or the sub-slot bandwidth (BW) in accordance with the designated system bandwidth (BWs).

9. The communication system (100) according to one of the previous claims, wherein each of the plurality of sub-slots (A, B) within one frequency slot belong to different groups and where each frequency slot comprises sub-slots (A, B) of all groups; or wherein each of the plurality of sub-slots (A, B) within the frequency slots belong to different groups and where each frequency slot comprises a real subset of the sub-slots of all groups, such that the plurality of frequency slots comprise different sub-slots.

10. Communication system (100) according to one of the claims 2, 3-9 when depending on claim 2, wherein the first and the second transmitter are configured to use a total bandwidth which is calculated based on the following formula:

$$\text{number of sub-slots (A, B)} \times \text{sub-slot bandwidth (BW)}.$$

11. Communication system (100) according to one of the previous claims, wherein the satellite receiver (10) is a satellite and wherein the first transmitter is a mobile or fixed satellite transmitter configured to transmit signals to satellites.

12. Communication system (100) according to one of the previous claims, wherein the bias is calculated based on a correction factor determined as a function of N.

13. Communication system (100) according to one of the previous claims, wherein the communication system (100) comprises a determiner configured to determine a correction factor for adapting a biasing of antenna gain envelope of a respective transmitter of the N satellite transmitters (12a),

wherein the correction factor is a function of the number of transmitters within the system and/or a function of the number of frequency sub-slots (A, B).

14. Communication system according to claim 13, wherein the determiner is configured to analyze the current transmitting requirements of all transmitters (12a, 12b) and to adapt the correction factor in accordance with the analysis.

15. A satellite transmitter (12a, 12b) of a satellite communication system (100) for transmitting signals using frequencies within a designated system bandwidth (BWs) to a receiver (10) for receiving the signals; wherein the satellite transmitter (12a, 12b) is a satellite transmitter of a plurality of N satellite transmitters (12a), wherein the plurality of N satellite transmitters are comprised in the satellite communication system (100), the satellite transmitter (12a) is configured to transmit a first signal using frequencies within the system bandwidth (BWs),

wherein the system bandwidth (BWs) is divided into a plurality of frequency slots (S1, S2), each of the plurality of frequency slots having a slot bandwidth ($BW_{ref}$), and wherein each of the plurality of frequency slots (S1, S2) is divided into a plurality of N sub-slots (A, B), each sub-slot having a sub-slot bandwidth (BW) and a subcarrier (SC1, SC2, SC3, SC4),

wherein the respective first sub-slot (A, B) of the plurality of N sub-slots (A, B) within all frequency slots is assigned to the satellite transmitter (12a) and wherein the respective $N^{th}$ sub-slot (A, B) of the plurality of N sub-slots (A, B) within all frequency slots is assigned to the $N^{th}$ satellite transmitter (12a),

wherein the satellite transmitter (12a) is configured to split the first signal into a plurality of signal portions, and to select for transmitting a first of the plurality of signal portions the first sub-slot of a first of the plurality of frequency slots (S1, S2) and to select for transmitting a second of the plurality of signal portions the first sub-slot of a second of the plurality of frequency slots (S1, S2), the second of the plurality of frequency slots (S1, S2) being different from the first of the plurality of frequency slots (S1, S2);

wherein an emitting behavior of the satellite transmitter is limited with regard to a peak transmit power, an antenna gain and with regard to a pointing performance, wherein the limitations are dependent on N and wherein the satellite transmitter (12a) is configured to bias an antenna gain envelope and/or a transmit power in accordance with the limitations.

16. A method for performing satellite communication using a satellite transmitter (12a, 12b) of a satellite communication system (100) within a designated system bandwidth (BWs), wherein the satellite transmitter (12a, 12b) is a satellite transmitter of a plurality of N satellite transmitters (12a), wherein the plurality of N satellite transmitters are comprised in the satellite communication system (100), wherein the satellite transmitter (12a) is configured to transmit a first signal using frequencies within the system bandwidth (BWs), the method comprising the following steps:

transmitting the first signal using frequencies within the system bandwidth (BWs) to a receiver (10) for receiving the first signal, wherein the system bandwidth (BWs) is divided into a plurality of frequency slots (S1, S2), each of the plurality of frequency slots having a slot bandwidth ($BW_{ref}$), and wherein each of the plurality of frequency slots (S1, S2) is divided into a plurality of N sub-slots (A, B), each sub-slot having a sub-slot bandwidth (BW) and a subcarrier (SC1, SC2, SC3, SC4), wherein the respective first sub-slot (A, B) of the plurality of N sub-slots (A, B) within all frequency slots is assigned to the satellite transmitter (12a) and wherein the respective $N^{th}$ sub-slot (A, B) of the plurality of N sub-slots (A, B) within all frequency slots is assigned to the $N^{th}$ satellite transmitter (12a);

splitting the first signal into a plurality of signal portions; and

selecting for transmitting a first of the plurality of signal portions the first sub-slot of a first of the plurality of frequency slots (S1, S2); and

selecting for transmitting a second of the plurality of signal portions the first sub-slot of a second of the plurality of frequency slots (S1, S2), the second of the plurality of frequency slots (S1, S2) being different from the first of the plurality of frequency slots (S1, S2);

wherein an emitting behavior of for the satellite transmitter is limited with regard to a peak transmit power, an antenna gain and with regard to a pointing performance, wherein the limitations are dependent on N and biasing the satellite transmitter (12a) an antenna gain envelope and/or a transmit power in accordance with the limitations.

17. A computer program comprising instructions which, when the program is executed by a computer, cause the computer to carry out the method of claim 16.

**Patentansprüche**

1. Satellitenkommunikationssystem (100) zum Durchführen von Kommunikation innerhalb einer bestimmten Systembandbreite (BWs), wobei das System folgende Merkmale aufweist:

   eine Mehrzahl von N Satellitensendern (12a), wobei die Mehrzahl von N Satellitensendern (12a) einen ersten Satellitensender (12a) aufweist, der dazu ausgebildet ist, ein erstes Signal unter Verwendung von Frequenzen innerhalb der Systembandbreite (BWs) zu senden;
   einen Satellitenempfänger (10) zum Empfangen zumindest des ersten Signals,
   wobei die Systembandbreite (BWs) in eine Mehrzahl von Frequenzschlitzen (S1, S2) unterteilt ist, wobei jeder der Mehrzahl von Frequenzschlitzen eine Schlitzbandbreite ($BW_{ref}$) aufweist, und wobei jeder der Mehrzahl von Frequenzschlitzen (S1, S2) in eine Mehrzahl von N Teilschlitzen (A, B) unterteilt ist, wobei jeder Teilschlitz eine Teilschlitzbandbreite (BW) und einen Teilträger (SC1, SC2, SC3, SC4) aufweist, wobei der jeweilige erste Teilschlitz (A, B) der Mehrzahl von N Teilschlitzen (A, B) innerhalb aller Frequenzschlitze dem ersten Satellitensender (12a) zugewiesen ist, und wobei der jeweilige N-te Teilschlitz (A, B) der Mehrzahl von N Teilschlitzen (A, B) innerhalb aller Frequenzschlitze dem N-ten Satellitensender (12a) zugewiesen ist,
   wobei der erste Satellitensender (12a) dazu ausgebildet ist, das erste Signal in eine Mehrzahl von Signalabschnitten aufzuteilen und zum Senden eines ersten der Mehrzahl von Signalabschnitten den ersten Teilschlitz eines ersten der Mehrzahl von Frequenzschlitzen (S1, S2) auszuwählen und zum Senden eines zweiten der Mehrzahl von Signalabschnitten den ersten Teilschlitz eines zweiten der Mehrzahl von Frequenzschlitzen (S1, S2) auszuwählen, wobei sich der zweite der Mehrzahl von Frequenzschlitzen (S1, S2) von dem ersten der Mehrzahl von Frequenzschlitzen (S1, S2) unterscheidet;
   wobei ein Aussendeverhalten jedes der Mehrzahl von N Satellitensendern in Bezug auf eine Spitzensendeleistung, einen Antennengewinn und in Bezug auf ein Zeigeverhalten eingeschränkt ist, wobei die Einschränkungen von N abhängig sind, und wobei der erste Satellitensender (12a) dazu ausgebildet ist, eine Antennengewinnhüllkurve und/oder eine Sendeleistung gemäß den Einschränkungen vorzuspannen.

2. Kommunikationssystem (100) gemäß Anspruch 1, wobei das Kommunikationssystem einen zweiten Sender (12b) zum Senden eines zweiten Signals unter Verwendung von Frequenzen innerhalb der Systembandbreite (BWs) aufweist;

   wobei der zweite Sender (12b) dazu ausgebildet ist, das zweite Signal in eine zweite Mehrzahl von Signalabschnitten aufzuteilen, und
   zum Senden eines ersten der zweiten Mehrzahl von Signalabschnitten einen zweiten Teilschlitz des ersten der Mehrzahl von Frequenzschlitzen (S1, S2) auszuwählen und zum Senden eines zweiten der zweiten Mehrzahl von Signalabschnitten einen zweiten Teilschlitz des zweiten der Mehrzahl von Frequenzschlitzen (S1, S2) auszuwählen.

3. Kommunikationssystem (100) gemäß Anspruch 2, bei dem der erste und der zweite Sender (12a, 12b) dazu ausgebildet sind, zum Senden der Mehrzahl von Signalabschnitten unterschiedliche Teilträger (SC1, SC2, SC3, SC4) zu verwenden, und/oder der erste und der zweite Sender (12a, 12b) dazu ausgebildet sind, zum Senden der Mehrzahl von Signalabschnitten Teilträger (SC1, SC2, SC3, SC4) unterschiedlicher Frequenzschlitze (S1, S2) zu verwenden.

4. Kommunikationssystem (100) gemäß einem der vorherigen Ansprüche, bei dem der erste Sender (12a) dazu ausgebildet ist, zum Senden eines dritten der Mehrzahl von Signalabschnitten den ersten Teilschlitz eines dritten der Mehrzahl von Frequenzschlitzen auszuwählen, wobei der dritte der Mehrzahl von Frequenzschlitzen von dem ersten und dem zweiten der Mehrzahl von Frequenzschlitzen unterschiedlich ist.

5. Kommunikationssystem (100) gemäß einem der vorherigen Ansprüche, bei dem alle Teilschlitzbandbreiten (BW) der Mehrzahl von Teilschlitzen (A, B) zumindest eines der Frequenzschlitze (S1, S2) gleiche Längen aufweisen.

6. Kommunikationssystem (100) gemäß einem der vorherigen Ansprüche, bei dem Teilträger (SC1, SC2, SC3, SC4) innerhalb zumindest eines der Mehrzahl von Frequenzschlitzen (S1, S2) oder innerhalb aller der Mehrzahl von Frequenzschlitzen (S1, S2) gleichmäßig beabstandet angeordnet sind.

7. Kommunikationssystem (100) gemäß einem der vorherigen Ansprüche, bei dem der erste Satellitensender (12a) dazu ausgebildet ist, eine Anzahl von Frequenzschlitzen (S1, S2) oder eine Anzahl von Teilschlitzen (A, B) oder die Teilschlitzbandbreite (BW) dynamisch gemäß einer Anzahl von Sendern (12a, 12b) oder gemäß einer erforderlichen Bandbreite für jeden Sender auszuwählen.

8. Kommunikationssystem (100) gemäß einem der vorherigen Ansprüche, bei dem der erste Satellitensender (12a) dazu ausgebildet ist, eine Anzahl von Frequenzschlitzen (S1, S2) oder eine Anzahl von Teilschlitzen (A, B) oder die Teilschlitzbandbreite (BW) dynamisch gemäß der bezeichneten Systembandbreite (BWs) auszuwählen.

9. Das Kommunikationssystem (100) gemäß einem der vorherigen Ansprüche,

   bei dem jeder der Mehrzahl von Teilschlitzen (A, B) innerhalb eines Frequenzschlitzes zu unterschiedlichen Gruppen gehört, und wobei jeder Frequenzschlitz Teilschlitze (A, B) aller Gruppen aufweist; oder
   wobei jeder der Mehrzahl von Teilschlitzen (A, B) innerhalb der Frequenzschlitze zu unterschiedlichen Gruppen gehört, und wobei jeder Frequenzschlitz eine reelle Teilmenge der Teilschlitze aller Gruppen aufweist, sodass die Mehrzahl von Frequenzschlitzen unterschiedliche Teilschlitze aufweist.

10. Kommunikationssystem gemäß einem der Ansprüche 2, 3 bis 9 bei Abhängigkeit von Anspruch 2, wobei der erste und der zweite Sender dazu ausgebildet sind, eine Gesamtbandbreite zu verwenden, die basierend auf der folgenden Formel berechnet wird:

$$\text{Anzahl von Teilschlitzen (A, B)} \times \text{Teilschlitz-Bandbreite (BW)}.$$

11. Kommunikationssystem (100) gemäß einem der vorherigen Ansprüche, bei dem der Satellitenempfänger (10) ein Satellit ist, und bei dem der erste Sender ein mobiler oder fester Satellitensender ist, der dazu ausgebildet ist, Signale an Satelliten zu senden.

12. Kommunikationssystem (100) gemäß einem der vorherigen Ansprüche, bei dem die Vorspannung basierend auf einem Korrekturfaktor berechnet wird, der als eine Funktion von N bestimmt wird.

13. Kommunikationssystem (100) gemäß einem der vorherigen Ansprüche, wobei das Kommunikationssystem (100) einen Bestimmer aufweist, der dazu ausgebildet ist, einen Korrekturfaktor zum Anpassen einer Vorspannung einer Antennengewinnhüllkurve eines jeweiligen Senders der N Satellitensender (12a) zu bestimmen, wobei der Korrekturfaktor eine Funktion der Anzahl von Sendern innerhalb des Systems und/oder eine Funktion der Anzahl von Frequenzteilschlitzen (A, B) ist.

14. Kommunikationssystem gemäß Anspruch 13, bei dem der Bestimmer dazu ausgebildet ist, die aktuellen Sendeanforderungen aller Sender (12a, 12b) zu analysieren und den Korrekturfaktor gemäß der Analyse anzupassen.

15. Ein Satellitensender (12a, 12b) eines Satellitenkommunikationssystems (100) zum Senden von Signalen unter Verwendung von Frequenzen innerhalb einer bestimmten Systembandbreite (BWs) an einen Empfänger (10) zum Empfangen der Signale; wobei der Satellitensender (12a, 12b) ein Satellitensender einer Mehrzahl von N Satellitensendern (12a) ist, wobei die Mehrzahl von N Satellitensendern in dem Satellitenkommunikationssystem (100) beinhaltet ist, wobei der Satellitensender (12a) dazu ausgebildet ist, ein erstes Signal unter Verwendung von Frequenzen innerhalb der Systembandbreite (BWs) zu senden,

   wobei die Systembandbreite (BWs) in eine Mehrzahl von Frequenzschlitzen (S1, S2) unterteilt ist, wobei jeder der Mehrzahl von Frequenzschlitzen eine Schlitzbandbreite ($BW_{ref}$) aufweist, und wobei jeder der Mehrzahl von Frequenzschlitzen (S1, S2) in eine Mehrzahl von N Teilschlitzen (A, B) unterteilt ist, wobei jeder Teilschlitz eine Teilschlitzbandbreite (BW) und einen Teilträger (SC1, SC2, SC3, SC4) aufweist, wobei der jeweilige erste Teilschlitz (A, B) der Mehrzahl von N Teilschlitzen (A, B) innerhalb aller Frequenzschlitze dem Satellitensender (12a) zugewiesen ist, und wobei der jeweilige N-te Teilschlitz (A, B) der Mehrzahl von N Teilschlitzen (A, B) innerhalb aller Frequenzschlitze dem N-ten Satellitensender (12a) zugewiesen ist,
   wobei der Satellitensender (12a) dazu ausgebildet ist, das erste Signal in eine Mehrzahl von Signalabschnitten aufzuteilen und zum Senden eines ersten der Mehrzahl von Signalabschnitten den ersten Teilschlitz eines ersten der Mehrzahl von Frequenzschlitzen (S1, S2) auszuwählen und zum Senden eines zweiten der Mehrzahl von Signalabschnitten den ersten Teilschlitz eines zweiten der Mehrzahl von Frequenzschlitzen (S1, S2) auszuwählen, wobei sich der zweite der Mehrzahl von Frequenzschlitzen (S1, S2) von dem ersten der Mehrzahl von Frequenzschlitzen (S1, S2) unterscheidet;
   wobei ein Aussendeverhalten des Satellitensenders in Bezug auf eine Spitzensendeleistung, einen Antennengewinn und in Bezug auf ein Zeigeverhalten eingeschränkt ist, wobei die Einschränkungen von N abhängig sind, und wobei der Satellitensender (12a) dazu ausgebildet ist, eine Antennengewinnhüllkurve und/oder eine Sendeleistung gemäß den Einschränkungen vorzuspannen.

16. Ein Verfahren zum Durchführen von Satellitenkommunikation unter Verwendung eines Satellitensenders (12a, 12b) eines Satellitenkommunikationssystems (100) innerhalb einer bestimmten Systembandbreite (BWs), wobei der Satellitensender (12a, 12b) ein Satellitensender einer Mehrzahl von N Satellitensendern (12a) ist, wobei die Mehrzahl von N Satellitensendern in dem Satellitenkommunikationssystem (100) beinhaltet ist, wobei der Satellitensender (12a) dazu ausgebildet ist, ein erstes Signal unter Verwendung von Frequenzen innerhalb der Systembandbreite (BWs) zu senden, wobei das Verfahren folgende Schritte aufweist:

Senden des ersten Signals unter Verwendung von Frequenzen innerhalb der Systembandbreite (BWs) an einen Empfänger (10) zum Empfangen des ersten Signals, wobei die Systembandbreite (BWs) in eine Mehrzahl von Frequenzschlitzen (S1, S2) unterteilt ist, wobei jeder der Mehrzahl von Frequenzschlitzen eine Schlitzbandbreite (BW_ref) aufweist, und wobei jeder der Mehrzahl von Frequenzschlitzen (S1, S2) in eine Mehrzahl von N Teilschlitzen (A, B) unterteilt ist, wobei jeder Teilschlitz eine Teilschlitzbandbreite (BW) und einen Teilträger (SC1, SC2, SC3, SC4) aufweist, wobei der jeweilige erste Teilschlitz (A, B) der Mehrzahl von N Teilschlitzen (A, B) innerhalb aller Frequenzschlitze dem Satellitensender (12a) zugewiesen ist, und wobei der jeweilige N-te Teilschlitz (A, B) der Mehrzahl von N Teilschlitzen (A, B) innerhalb aller Frequenzschlitze dem N-ten Satellitensender (12a) zugewiesen ist;
Aufteilen des ersten Signals in eine Mehrzahl von Signalabschnitten; und
Auswählen eines ersten der Mehrzahl von Frequenzschlitzen (S1, S2) zum Senden eines ersten der Mehrzahl von Signalabschnitten des ersten Teilschlitzes; und
Auswählen eines zweiten der Mehrzahl von Frequenzschlitzen (S1, S2) zum Senden eines zweiten der Mehrzahl von Signalabschnitten des ersten Teilschlitzes, wobei der zweite der Mehrzahl von Frequenzschlitzen (S1, S2) von dem ersten der Mehrzahl von Frequenzschlitzen (S1, S2) unterschiedlich ist;
wobei ein Aussendeverhalten des Satellitensenders in Bezug auf eine Spitzensendeleistung, einen Antennengewinn und in Bezug auf ein Zeigeverhalten eingeschränkt ist, wobei die Einschränkungen von N abhängig sind, und der Satellitensender (12a) eine Antennengewinnhüllkurve und/oder eine Sendeleistung gemäß den Einschränkungen vorspannt.

17. Ein Computerprogramm mit Befehlen, die, wenn das Programm durch einen Computer ausgeführt wird, bewirken, dass der Computer das Verfahren gemäß Anspruch 16 ausführt.

**Revendications**

1. Système de communication par satellite (100) pour effectuer une communication dans une largeur de bande de système désignée (BWs), le système comprenant:

une pluralité de N transmetteurs par satellite (12a), dans lequel la pluralité de N transmetteurs par satellite (12a) comprend un premier transmetteur par satellite (12a) qui est configuré pour transmettre un premier signal à l'aide des fréquences dans la largeur de bande de système (BWs);
un récepteur par satellite (10) destiné à recevoir au moins le premier signal,
dans lequel la largeur de bande de système (BWs) est divisée en une pluralité de créneaux de fréquence (S1, S2), chacun de la pluralité de créneaux de fréquence présentant une largeur de bande de créneau (BW_ref), et dans lequel chacun de la pluralité de créneaux de fréquence (S1, S2) est divisé en une pluralité de N sous-créneaux (A, B), chaque sous-créneau présentant une largeur de bande de sous-créneau (BW) et une sous-porteuse (SC1, SC2, SC3, SC4), dans lequel le premier sous-créneau respectif (A, B) de la pluralité de N sous-créneaux (A, B) dans tous les créneaux de fréquence est attribué au premier transmetteur par satellite (12a) et dans lequel le N-ième sous-créneau respectif (A, B) de la pluralité de N sous-créneaux (A, B) dans tous les créneaux de fréquence est attribué au N-ième transmetteur par satellite (12a), dans lequel le premier transmetteur par satellite (12a) est configuré pour diviser le premier signal en une pluralité de parties de signal et pour sélectionner, pour transmettre une première de la pluralité de parties de signal, le premier sous-créneau d'un premier de la pluralité de créneaux de fréquence (S1, S2) et pour sélectionner, pour transmettre une deuxième de la pluralité de parties de signal, le premier sous-créneau d'un deuxième de la pluralité de créneaux de fréquence (S1, S2), le deuxième de la pluralité de créneaux de fréquence (S1, S2) étant différent du premier de la pluralité de créneaux de fréquence (S1, S2);

dans lequel un comportement de transmission de chacun de la pluralité de N transmetteurs par satellite est limité en ce qui concerne une puissance d'émission de crête, un gain d'antenne et en ce qui concerne une performance de pointage, dans lequel les limitations dépendent de N et dans lequel le premier transmetteur par satellite (12a) est configuré pour polariser une enveloppe de gain d'antenne et/ou une puissance de transmission selon les limitations.

2. Système de communication (100) selon la revendication 1, dans lequel le système de communication comprend un deuxième transmetteur (12b) destiné à transmettre un deuxième signal à l'aide des fréquences dans la largeur de bande de système (BWs);

   dans lequel le deuxième transmetteur (12b) est configuré pour diviser le deuxième signal en une deuxième pluralité de parties de signal, et
   pour sélectionner, pour transmettre une première de la deuxième pluralité de parties de signal, un deuxième sous-créneau de la première de la pluralité de créneaux de fréquence (S1, S2) et pour sélectionner, pour transmettre une deuxième de la deuxième pluralité de parties de signal, un deuxième sous-créneau du deuxième de la pluralité de créneaux de fréquence (S1, S2).

3. Système de communication (100) selon la revendication 2, dans lequel le premier et le deuxième transmetteur (12a, 12b) sont configurés pour utiliser, pour transmettre la pluralité de parties de signal, différentes sous-porteuses (SC1, SC2, SC3, SC4) et/ou
   les premier et deuxième transmetteurs (12a, 12b) sont configurés pour utiliser, pour transmettre la pluralité de parties de signal, des sous-porteuses (SC1, SC2, SC3, SC4) de différents créneaux de fréquence (S1, S2).

4. Système de communication (100) selon l'une des revendications précédentes, dans lequel le premier transmetteur (12a) est configuré pour sélectionner, pour transmettre une troisième de la pluralité de parties de signal, le premier sous-créneau d'un troisième de la pluralité de créneaux de fréquence, le troisième de la pluralité de créneaux de fréquence étant différent du premier et du deuxième de la pluralité de créneaux de fréquence.

5. Système de communication (100) selon l'une des revendications précédentes, dans lequel toutes les largeurs de bande de sous-créneau (BW) de la pluralité de sous-créneaux (A, B) d'au moins un des créneaux de fréquence (S1, S2) présentent des longueurs égales.

6. Système de communication (100) selon l'une des revendications précédentes, dans lequel les sous-porteuses (SC1, SC2, SC3, SC4) dans au moins un de la pluralité de créneaux de fréquence (S 1, S2) ou dans la totalité de la pluralité de créneaux de fréquence (S 1, S2) sont disposés de manière équidistante.

7. Système de communication (100) selon l'une des revendications précédentes, dans lequel le premier transmetteur par satellite (12a) est configuré pour sélectionner de manière dynamique un nombre de créneaux de fréquence (S1, S2) ou un nombre de sous-créneaux (A, B) ou la largeur de bande de sous-créneau (BW) selon un nombre de transmetteurs (12a, 12b) ou selon une largeur de bande requise pour chaque transmetteur.

8. Système de communication (100) selon l'une des revendications précédentes, dans lequel le premier transmetteur par satellite (12a) est configuré pour sélectionner de manière dynamique un nombre de créneaux de fréquence (S1, S2) ou un nombre de sous-créneaux (A, B) ou la largeur de bande de sous-créneau (BW) selon la largeur de bande de système désignée (BWs).

9. Système de communication (100) selon l'une des revendications précédentes, dans lequel chacun de la pluralité de sous-créneaux (A, B) dans un créneau de fréquence appartient à différents groupes et dans lequel chaque créneau de fréquence comprend des sous-créneaux (A, B) de tous les groupes; ou
   dans lequel chacun de la pluralité de sous-créneaux (A, B) dans les créneaux de fréquence appartient à différents groupes et dans lequel chaque créneau de fréquence comprend un sous-ensemble réel des sous-créneaux de tous les groupes, de sorte que la pluralité de créneaux de fréquence comprenne différents sous-créneaux.

10. Système de communication (100) selon l'une des revendications 2, 3 à 9 lorsqu'elles dépendent de la revendication 2, dans lequel le premier et le deuxième transmetteur sont configurés pour utiliser une largeur de bande totale qui est calculée sur base de la formule suivante:

nombre de sous-créneaux (A, B) x largeur de bande de sous-créneau (BW).

11. Système de communication (100) selon l'une des revendications précédentes, dans lequel le récepteur par satellite (10) est un satellite et dans lequel le premier transmetteur est un transmetteur par satellite mobile ou fixe configuré pour transmettre des signaux vers des satellites.

12. Système de communication (100) selon l'une des revendications précédentes, dans lequel la polarisation est calculée à partir d'un facteur de correction déterminé en fonction de N.

13. Système de communication (100) selon l'une des revendications précédentes, dans lequel le système de communication (100) comprend un déterminateur configuré pour déterminer un facteur de correction pour adapter une polarisation d'enveloppe de gain d'antenne d'un transmetteur respectif des N transmetteurs par satellite (12a), dans lequel le facteur de correction est une fonction du nombre de transmetteurs dans le système et/ou une fonction du nombre de sous-créneaux de fréquence (A, B).

14. Système de communication selon la revendication 13, dans lequel le déterminateur est configuré pour analyser les conditions de transmission requises actuelles de tous les transmetteurs (12a, 12b) et pour adapter le facteur de correction selon l'analyse.

15. Transmetteur par satellite (12a, 12b) d'un système de communication par satellite (100) destiné à transmettre des signaux à l'aide des fréquences dans une largeur de bande de système désignée (BWs) à un récepteur (10) destiné à recevoir les signaux; dans lequel le transmetteur par satellite (12a, 12b) est un transmetteur par satellite parmi une pluralité de N transmetteurs par satellite (12a), dans lequel la pluralité de N transmetteurs par satellite sont compris dans le système de communication par satellite (100), le transmetteur par satellite (12a) est configuré pour transmettre un premier signal à l'aide des fréquences dans la largeur de bande de système (BWs),

dans lequel la largeur de bande de système (BWs) est divisée en une pluralité de créneaux de fréquence (S1, S2), chacun de la pluralité de créneaux de fréquence présentant une largeur de bande de système (BWs), et dans lequel chacun de la pluralité de créneaux de fréquence (S1, S2) est divisé en une pluralité de N sous-créneaux (A, B), chaque sous-créneau présentant une largeur de bande de sous-créneau (BW) et une sous-porteuse (SC1, SC2, SC3, SC4),
dans lequel le premier sous-créneau respectif (A, B) de la pluralité de N sous-créneaux (A, B) dans tous les créneaux de fréquence est attribué au transmetteur par satellite (12a) et dans lequel le N-ième sous-créneau respectif (A, B) de la pluralité de N sous-créneaux (A, B) dans tous les créneaux de fréquence est attribué au N-ième transmetteur par satellite (12a),
dans lequel le transmetteur par satellite (12a) est configuré pour diviser le premier signal en une pluralité de parties de signal, et pour sélectionner, pour transmettre une première de la pluralité de parties de signal, le premier sous-créneau d'un premier de la pluralité de créneaux de fréquence (S1, S2) et pour sélectionner, pour transmettre une deuxième de la pluralité de parties de signal, le premier sous-créneau d'un deuxième de la pluralité de créneaux de fréquence (S1, S2), le deuxième de la pluralité de créneaux de fréquence (S1, S2) étant différent du premier de la pluralité de créneaux de fréquence (S1, S2);
dans lequel un comportement d'émission du transmetteur par satellite est limité en ce qui concerne une puissance d'émission de crête, un gain d'antenne et en ce qui concerne une performance de pointage, dans lequel les limitations dépendent de N et dans lequel le transmetteur par satellite (12a) est configuré pour polariser une enveloppe de gain d'antenne et/ou une puissance d'émission selon les limitations.

16. Procédé pour effectuer une communication par satellite à l'aide d'un transmetteur par satellite (12a, 12b) d'un système de communication par satellite (100) dans une largeur de bande de système désignée (BWs), dans lequel le transmetteur par satellite (12a, 12b) est un transmetteur par satellite d'une pluralité de N transmetteurs par satellite (12a), dans lequel la pluralité de N transmetteurs par satellite sont compris dans le système de communication par satellite (100), dans lequel le transmetteur par satellite (12a) est configuré pour transmettre un premier signal à l'aide des fréquences dans la largeur de bande de système (BWs), le procédé comprenant les étapes suivantes consistant à:

transmettre le premier signal à l'aide des fréquences dans la largeur de bande de système (BWs) à un récepteur (10) destiné à recevoir le premier signal, où la largeur de bande de système (BWs) est divisée en une pluralité de créneaux de fréquence (S1, S2), chacun de la pluralité de créneaux de fréquence présentant une largeur de bande de créneau (BW$_{ref}$), et dans lequel chacun de la pluralité de créneaux de fréquence (S1, S2) est divisé en une pluralité de N sous-créneaux (A, B), chaque sous-créneau présentant une largeur de bande de sous-créneau (BW) et une sous-porteuse (SC1, SC2, SC3, SC4), dans lequel le premier sous-créneau respectif (A, B) de la pluralité de N sous-créneaux (A, B) dans tous les créneaux de fréquence est attribué au transmetteur par satellite (12a) et dans lequel le N-ième sous-créneau respectif (A, B) de la pluralité de N sous-créneaux (A, B) dans tous les créneaux de fréquence est attribué au N-ième transmetteur par satellite (12a);

diviser le premier signal en une pluralité de parties de signal; et

sélectionner, pour transmettre une première de la pluralité de parties de signal, le premier sous-créneau d'un premier de la pluralité de créneaux de fréquence (S1, S2); et

sélectionner, pour transmettre une deuxième de la pluralité de parties de signal, le premier sous-créneau d'un deuxième de la pluralité de créneaux de fréquence (S1, S2), le deuxième de la pluralité de créneaux de fréquence (S1, S2) étant différent du premier de la pluralité de créneaux de fréquence (S1, S2);

dans lequel un comportement de transmission du transmetteur par satellite est limité en ce qui concerne une puissance d'émission de crête, un gain d'antenne et en ce qui concerne une performance de pointage, dans lequel les limitations dépendent de N et la polarisation par le transmetteur par satellite (12a), d'une enveloppe de gain d'antenne et/ou d'une puissance d'émission selon les limitations.

17. Programme d'ordinateur comprenant des instructions qui, lorsque le programme est exécuté par un ordinateur, amènent l'ordinateur à réaliser le procédé selon la revendication 16.

Figure 1

Figure 2

Figure 3

EP 3 497 823 B1

Figure 4

EP 3 497 823 B1

margin [dB]

pointing angle [°]

- - - - - antenna gain (max. de-pointed)
———— antenna gain (ideal pointed)
........... antenna gain (N = 10)

EP 3 497 823 B1

Figure 5

Figure 6

Figure 7

Figure 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007248173 A
- US 2002058477 A
- US 8885693 B
- US 2010124922 A
- US 2002146982 A
- US 2002146995 A
- US 2002151278 A
- US 2011269396 A
- US 7962134 B
- US 2009052373 A
- US 2004037238 A
- US 6052364 A
- US 2012156986 A
- US 2002050953 A
- US 5398035 A
- US 2011304496 A